# EUROPEAN PATENT SPECIFICATION

(11) **EP 3 628 702 B1**
(45) Date of publication and mention of the grant of the patent: **30.06.2021**
(21) Application number: 19198824.5
(22) Date of filing: 21.09.2019
(51) Int. Cl.: C08L 7/00, C08K 3/36, C08K 5/372, B60C 1/00

(54) **RUBBER COMPOSITION AND TIRE WITH TREAD**
KAUTSCHUKZUSAMMENSETZUNG UND REIFEN MIT LAUFFLÄCHE
COMPOSITION DE CAOUTCHOUC ET PNEUMATIQUE AVEC BANDE DE ROULEMENT

(30) Priority: 21.09.2018 US 201862734419 P; 16.07.2019 US 201916512435
(43) Date of publication of application: 01.04.2020
(73) Proprietor: The Goodyear Tire & Rubber Company, Akron, OH 44316 (US)
(72) Inventor: ISITMAN, Nihat Ali, Hudson, OH Ohio 44236 (US); SANDSTROM, Paul Harry, Cuyahoga Falls, OH Ohio 44223 (US); MARTTER, Teresa Diane, Akron, OH Ohio 44320 (US); MURRAY, Aaron Patrick, Chardon, Ohio 44024 (US)
(74) Representative: Kutsch, Bernd

(56) References cited:
- EP-A1- 1 398 347
- EP-A1- 3 031 621
- EP-A1- 3 127 712
- EP-A1- 3 345 960
- US-A1- 2012 029 114

## Description

### Field of the Invention

This invention relates to a rubber composition and to a tire with a tread of such a rubber composition. The rubber composition contains a combination of relatively high and relatively low glass transition temperature (Tg) synthetic elastomers. The high Tg elastomer comprises a relatively high Tg, high vinyl content, functionalized polybutadiene rubber, and the relatively low Tg elastomer comprises a low Tg, low vinyl content, functionalized polybutadiene rubber. The tread rubber may contain traction resins, may contain rosin acid and may contain triglyceride vegetable rubber processing oil.

### Background of the Invention

Tires are sometimes desired with treads for promoting traction on wet surfaces. Various rubber compositions may be proposed for such tire treads.

For example, tire tread rubber compositions which contain high molecular weight, relatively high Tg (high glass transition temperature) diene based synthetic elastomer(s) might be desired for such purpose particularly for wet traction (traction of tire treads on wet road surfaces). Such tire tread may be desired where its reinforcing filler is primarily precipitated silica with its reinforcing filler therefore considered as being precipitated silica rich insofar as its reinforcing filler is concerned.

In one embodiment, the improved predictive wet traction performance for the tread rubber composition is based on a relative maximization of its tan delta physical property at 0°C.

However, it is also desired to provide such tread rubber composition containing the relatively high Tg elastomer for wet traction with a lower stiffness at lower temperatures to promote cold weather winter performance, particularly for vehicular snow driving.

In one embodiment, the predictive cold weather performance for the tread rubber composition is based on its stiffness physical property at -20°C as a measure of indication of such predictive cold weather performance (e.g. stiffness property such as storage modulus E').

Therefore, it is desirable to provide such vehicular tread with a rubber composition containing both relatively high and relatively low Tg polybutadiene elastomers with a relatively optimized (relatively maximized) tan delta property at 0°C (for predictive wet traction performance improvement) combined with a relatively optimized (relatively minimized) stiffness property at -20°C (for predictive cold weather performance improvement).

Historically, a tire tread has been proposed for a combination of wet traction and cold weather performance containing a combination of relatively high Tg, high vinyl polybutadiene rubber and relatively low Tg, low vinyl polybutadiene rubber. For example, see US-B-9,441,098.

Here, it is proposed to evaluate use of a silica, preferably a precipitated silica reinforced tread rubber composition for such purpose containing a combination of functionalized relatively high Tg relatively high vinyl content polybutadiene rubber and functionalized relatively low Tg relatively low vinyl content polybutadiene rubber which contain functional groups reactive with hydroxyl groups contained on said silica reinforcing filler.

In the description of this invention, the terms "compounded" rubber compositions and "compounds" are used to refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

The glass transition temperature (Tg) of the elastomers is determined as a peak-midpoint by DSC (differential scanning calorimetry) measurements at a temperature rising rate of 10°C per minute, in accordance with ASTM D7426.

The softening point of a resin is determined in accordance with ASTM E28, which might sometimes be referred to as a ring and ball softening point.

### Summary and Practice of the Invention

The invention relates to a rubber composition in accordance with claim 1 and to a tire in accordance with claim 15.

Dependent claims refer to preferred embodiments of the invention.

In accordance with a preferred aspect of this invention, a pneumatic tire is provided having a circumferential rubber tread intended to be ground-contacting, where said tread is a rubber composition containing precipitated silica reinforcement comprising, based on parts by weight per 100 parts by weight elastomer (phr):
(A) 100 phr of conjugated diene-based elastomers comprising;
   (1) 20 to 80, alternately 25 to 75, phr of a functionalized relatively high Tg, relatively high vinyl polybutadiene rubber having a Tg in a range of from -40°C to -10°C and an isomeric vinyl 1,2-content in a range of from 65 to 85 percent, where said functionalized high vinyl polybutadiene rubber contains functional groups reactive with hydroxyl groups on said precipitated silica reinforcement;
   (2) 80 to 20, alternately 75 to 25, phr of a functionalized relatively low Tg, relatively low vinyl polybutadiene rubber having a Tg in a range of from -108°C to -90°C and an isomeric vinyl 1,2-content in a range of from zero to 15 percent, where said functionalized low vinyl polybutadiene rubber contains functional groups reactive with hydroxyl groups on said precipitated silica reinforcement;
      provided that the weight ratio of low vinyl to high vinyl functionalized polybutadiene rubber is at least 1/1 and alternately at least 1.5/1;
(B) 60 to 200, alternately from 80 to 160, phr of a rubber reinforcing filler comprising a combination of precipitated silica (amorphous synthetic precipitated silica) and rubber reinforcing carbon black in a weight ratio of precipitated silica to rubber reinforcing carbon black of at least 9/1, together with a silica coupling agent having a moiety reactive with hydroxyl groups (e.g. silanol groups) on said precipitated silica and another different moiety interactive with said diene-based elastomers, and
(C) zero to 60, alternately from 5 to 40, phr of a traction promoting resin (e.g. traction between said tread and ground) comprising at least one of styrene-alphamethylstyrene resin, coumarone-indene resin, petroleum hydrocarbon resin, terpene polymer, terpene phenol resin, rosin derived resin and copolymers.

Preferably, the one or more resins have a softening point (ASTM E28) within a range of from 60°C to 150°C.

In one embodiment, said functional high vinyl containing polybutadiene elastomers are end-functionalized with at least one functional group reactive with hydroxyl groups on said precipitated silica.

In one embodiment, said functionalized high and low vinyl polybutadiene elastomers are end-functionalized during an anionic polymerization of 1,3-butadiene monomer by use of a functionalized polymerization initiator. Such functionalization may be referred to herein as a pre-end functionalization of the elastomer and thereby a pre-end functionalized elastomer.

In another embodiment, said functionalized high and low vinyl polybutadiene elastomers are end-functionalized during the polymerization of 1,3-butadiene monomer by use of a functionalized polymerization terminator. Such functionalization is referred to herein as a post-end functionalization of the elastomer and thereby a post-end functionalized elastomer.

In a further embodiment, said functionalized high and low vinyl polybutadiene elastomers are bi-end functionalized during the polymerization of 1,3-butadiene monomer by use of a combination of functionalized polymerization initiator and functionalized polymerization terminator. Such dual functionalization may be referred to herein as the reaction product of a living anionic elastomeric high vinyl polybutadiene where the polymerization of the 1,3-butadiene monomer is initiated with a functional polymerization initiator and the polymerization is terminated with a functional polymerization terminator.

In one embodiment, said functional high and low vinyl polybutadiene elastomers contain at least one functional group reactive with hydroxyl groups on said precipitated silica comprising:
(A) amine functional group reactive with hydroxyl groups on said precipitated silica,
(B) ailoxy functional group reactive with hydroxyl groups on said precipitated silica,
(C) a combination of amine and siloxy groups reactive with hydroxyl groups on said precipitated silica,
(D) a combination of siloxy and thiol groups reactive with hydroxyl groups on said precipitated silica,
(E) a combination of imine and siloxy groups reactive with hydroxyl groups on said precipitated silica,
(F) hydroxyl functional groups reactive with said precipitated silica,
(G) epoxy groups reactive with hydroxyl groups on said precipitated silica, and
(H) carboxyl groups reactive with hydroxyl groups on said precipitated silica.

In additional accordance with a preferred aspect of this invention, said tread rubber composition is exclusive of styrene containing elastomers.

In further accordance with a preferred aspect of this invention, said tire tread is provided as a sulfur cured rubber composition.

In one embodiment said tread rubber composition further contains up to 25, alternately up to 15, phr of at least one additional diene based elastomer exclusive of styrene containing elastomers. Such additional elastomer may comprise, for example, at least one of cis 1,4-polyisoprene rubber (natural rubber or synthetic rubber), and copolymers of isoprene and butadiene.

In one embodiment, said precipitated silica and silica coupling agent may be pre-reacted to form a composite thereof prior to their addition to the rubber composition.

In one embodiment, said precipitated silica and silica coupling agent may be added to the rubber composition and reacted together in situ within the rubber composition.

In one embodiment, the rubber composition contains traction promoting resin desirably comprising at least one of styrene/alphamethylstyrene resin, coumarone-indene resin, petroleum hydrocarbon resin, terpene polymer, terpene phenol resin and rosin derived resin, copolymers thereof and hydrogenated rosin acid.

In one embodiment, the resin is a styrene/alphamethylstyrene resin. Such styrene/alphamethylstyrene resin may be, for example, a relatively short chain copolymer of styrene and alphamethylstyrene. In one embodiment, such a resin may be suitably prepared, for example, by cationic copolymerization of styrene and alphamethylstyrene in a hydrocarbon solvent. The styrene/alphamethylstyrene resin may have, for example, a styrene content in a range of from 10 to 90 percent. The styrene/alphamethylstyrene resin may have a softening point, for example, in a range of from 60°C to 125°C, alternately from 80°C to 90°C (ASTM E28). A suitable styrene/alphamethylstyrene resin may be, for example, Resin 2336™ from Eastman or Sylvares SA85™ from Arizona Chemical.

In one embodiment, the resin is a coumarone-indene resin. Such coumarone-indene resin may have a softening point, for example, in a range of from 60°C to 150°C containing coumarone and indene as the monomer components making up the resin skeleton (main chain). Minor amounts of monomers other than coumarone and indene may be incorporated into the skeleton such as, for example, methyl coumarone, styrene, alphamethylstyrene, methylindene, vinyltoluene, dicyclopentadiene, cycopentadiene, and diolefins such as isoprene and piperlyene.

In one embodiment, the resin is a petroleum hydrocarbon resin. Such petroleum hydrocarbon resin may be, for example, an aromatic and/or nonaromatic (e.g. paraffinic) based resin. Various petroleum resins are available. Some petroleum hydrocarbon resins have a low degree of unsaturation and high aromatic content, whereas some are highly unsaturated and yet some contain no aromatic structure at all. Differences in the resins are largely due to the olefins contained in the petroleum-based feedstock from which the resins are derived. Conventional olefins for such resins include any C5 olefins (olefins and diolefins containing an average of five carbon atoms) such as, for example, cyclopentadiene, dicyclopentadiene, isoprene and piperylene, and any C9 olefins (olefins and diolefins containing an average of 9 carbon atoms) such as, for example, vinyltoluene and alphamethylstyrene. Such resins may be made from mixtures of such C5 and C9 olefins.

In one embodiment, said resin is a terpene resin. Such resin may comprise, for example, polymers of at least one of limonene, alpha pinene and beta pinene and having a softening point in a range of from 60°C to 160°C.

In one embodiment, the resin is a terpene-phenol resin. Such terpene-phenol resin may be, for example, a copolymer of phenolic monomer with a terpene such as, for example, limonene and pinene.

In one embodiment, the resin is a resin derived from rosin and derivatives. Representative thereof are, for example, gum rosin and wood rosin. Gum rosin and wood rosin have similar compositions, although the amount of the components of the rosins may vary. Such resins may be in the form of esters of rosin acids and polyols such as pentaerythritol or glycol.

In one embodiment, said rosin resin may be partially or fully hydrogenated.

The silica or precipitated silica reinforcement may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such precipitated silicas may, for example, also be characterized by having a dibutylphthalate (DBP) absorption value, for example, in a range of 100 to 400, and more usually 150 to 300 cc/100g.

Various commercially available precipitated silicas may be used, such as silicas from PPG Industries under the Hi-Sil trademark with designations 210, 243 and315; silicas from Solvay with, for example, designations of Zeosil 1165MP and Zeosil 165GR; silicas from Evonik with, for example, designations VN2 and VN3; and chemically treated (pre-hydrophobated) precipitated silicas such as for example Agilon™ 400 from PPG.

Representative examples of rubber reinforcing carbon blacks are, for example, and not intended to be limiting, are referenced in The Vanderbilt Rubber Handbook, 13th edition, year 1990, on Pages 417 and 418 with their ASTM designations. As indicated, such rubber reinforcing carbon blacks may have iodine absorptions ranging from, for example, 60 to 240 g/kg and DBP values ranging from 34 to 150 cc/100 g.

Representative of silica coupling agents for the precipitated silica are, for example;
(A) bis(3-trialkoxysilylalkyl) polysulfide containing an average in range of from 2 to 4, alternatively from 2 to 2.6 or from 3.2 to 3.8, sulfur atoms in its polysulfide connecting bridge, or
(B) an organoalkoxymercaptosilane, or
(C) their combination.

Representative of such bis(3-trialkoxysilylalkyl) polysulfide is bis(3-triethoxysilylpropyl) polysulfide.

It is readily understood by those having skill in the art that the vulcanizable rubber composition would be compounded by methods generally known in the rubber compounding art. In addition, said compositions could also contain fatty acid, zinc oxide, waxes, antioxidants, antiozonants and peptizing agents. Such fatty acids are typically basically carboxylic acids which may include, for example, stearic, palmitic, oleic acid and various mixtures thereof.

However, in one embodiment, rosin acid may be used instead of, and therefore to the exclusion or substantial exclusion (less than 0.5 phr) of, fatty carboxylic acids (e.g. a weight ratio of at least 6/1 and desirably at least 8/1 of rosin acid to fatty carboxylic acids and optionally without fatty carboxylic acids) in the rubber composition.

As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.2 to 6 phr being often more desirable. Typical amounts of processing aids for the rubber composition, where used, may comprise, for example, from 1 to 10 phr. Typical processing aids may be, for example, at least one of various fatty acids (e.g. at least one of palmitic, stearic and oleic acids) or fatty acid salts.

Rubber processing oils may be used, where desired, in an amount of, for example, from 10 up to 100, alternately from 15 to 45 phr, to aid in processing the uncured rubber composition. The processing oil used may include both extending oil contained in the production of the elastomers, and process oil freely added during blending of the elastomer with compounding ingredients. Suitable process oils include various oils as are known in the art, including aromatic, paraffinic, naphthenic, and low PCA oils, such as MES, TDAE, and heavy naphthenic oils, and vegetable (triglyceride based) oils such as, for example, sunflower, soybean, and safflower oils.

Therefore, in one embodiment, the rubber composition contains rubber processing oil comprising:
(A) triglyceride vegetable oil (e.g. comprised of at least one of sunflower, soybean and safflower oils), or
(B) a combination of triglyceride vegetable oil and petroleum based rubber processing oil.

Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 5 phr. Typical amounts of zinc oxide may comprise, for example, 2 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 2.5, phr. In another embodiment, combinations of a primary and a secondary accelerator might be used with the secondary accelerator being used in smaller amounts, such as, for example, from 0.05 to 4 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, sulfenamides, and xanthates. Often desirably the primary accelerator is a sulfenamide. If a second accelerator is used, the secondary accelerator is often desirably a guanidine such as for example a diphenylguanidine.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) of the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The pneumatic tire of the present invention may be, for example, a passenger tire, truck tire, a race tire, aircraft tire, agricultural tire, earthmover tire and off-the-road tire. Usually desirably the tire is a passenger or truck tire. The tire may also be a radial or bias ply tire, with a radial ply tire being usually desired.

Vulcanization of the pneumatic tire containing the tire tread of the present invention is generally carried out at conventional temperatures in a range of, for example, from 125°C to 200°C. Often it is desired that the vulcanization is conducted at temperatures ranging from 135°C to 180°C. Any of the usual vulcanization processes may be used such as heating in a press or mold, heating with superheated steam or hot air. Such tires can be built, shaped, molded and cured by various methods which are known and are readily apparent to those having skill in such art.

The following Examples are presented to further illustrate the invention. Their parts and percentages are by weight unless otherwise indicated.

### EXAMPLE I

### Preparation of Non- Functionalized and Functionalized Reletivelv High Vinyl Polybutadiene Elastomer

A 60 gallon (227 liter capacity) agitator containing jacketed reactor, having been dried and flushed with nitrogen, was charged with 210 pounds (95 kg) of a predried 11.1 weight percent 1,3-butadiene solution in hexane. During agitation, the solution temperature was increased to 135°F (57°C) by application of heat to the reactor jacket.

To the agitated heated solution in the reactor was added 17.5 ml of TMEDA (tetramethylenediamine as a polymerization modifier) and 30 ml of dry hexane followed by addition of 36.6 ml of 15 weight percent n-butyl lithium polymerization catalyst (as a polymerization initiator) in hexane.

The temperature of the solution in the reactor was allowed to increase to 152°F (67°C), and after 1.5 hours, the content of the reactor was slowly transferred to a second vessel that had been pre-charged with 82.5 ml of 3,3-bis(triethoxysilylpropyl) polysulfide, which may be referred to as bis(3-triethoxysilylpropyl) polysulfide, having a range of 2 to 2.6 connecting sulfur atoms in the polysulfidic bridge.

After 20 minutes of ageing, a polymerization stopping agent was added to stop the polymerization. The mixture was agitated for an additional 15 minutes to allow for the polymerization to discontinue

The resulting polymer product as an end functionalized as an end functionalized polybutadiene elastomer recovered by removing the hexane by steam stripping.

The recovered product was a functionalized relatively high Tg, relatively high vinyl, polybutadiene elastomer determined to have a Tg of -33°C and a vinyl 1,2-isomeric content of 70 percent with end-functional groups.

In a similar fashion, a non-functionalized version of a relatively high Tg polybutadiene elastomer (Polymer B) was made in which the disulfide, the bis(3-triethoxysilylpropyl) polysulfide, was omitted from the polymerization reaction procedure. The recovered polymer product was a non-functionalized relatively high Tg high vinyl polybutadiene elastomer determined to have a Tg of -36°C and a vinyl 1,2-isomeric content of 69 percent.

### EXAMPLE II

This study was conducted to evaluate the comparative use of the functionalized, relatively high Tg, relatively high vinyl polybutadiene elastomer (Polymer A) prepared via Example I herein with the non-functionalized relatively high Tg, relatively high vinyl polybutadiene elastomer (Polymer B) also prepared in Example I.

In this Example, exemplary rubber compositions for a tire tread were prepared for evaluation for promoting a combination of wet traction and cold weather (winter) performance for a tire tread. Of further interest is the impact of functionalization of the polybutadiene elastomer on the laboratory determined properties of abrasion resistance and hysteresis that are predictive of treadwear and rolling resistance, respectively, of a tire tread.

A first control rubber composition (Sample X) was prepared as a precipitated silica reinforced rubber composition containing a combination of 38 phr of commercially available functionalized styrene/butadiene rubber having a Tg of -23°C and 62 phr of a commercially available functionalized relatively low Tg, 12 per cent vinyl polybutadiene rubber having a Tg of -90°C.

A second control rubber composition (Sample Y) was prepared as a precipitated silica reinforced rubber composition containing a combination of 38 phr of a non-functionalized relatively high Tg relatively high vinyl polybutadiene rubber (Polymer B from Example I herein) having a Tg of -36°C and 62 phr of a functionalized low Tg, low vinyl polybutadiene rubber having a Tg of -90°C. The second control rubber composition (Sample Y) is similar to the first control rubber composition (Sample X), except the commercially available functionalized styrene/butadiene rubber is replaced with a non-functionalized high vinyl polybutadiene rubber (Polymer B).

An Experimental rubber composition (Sample Z) was prepared as a precipitated silica reinforced rubber composition containing a combination of 38 phr of a functionalized relatively high Tg, relatively high vinyl polybutadiene rubber (Polymer A from Example I herein) having a Tg of -33°C and 62 phr of a functionalized relatively low Tg, relatively low vinyl polybutadiene rubber having a Tg of -90°C. This experimental rubber composition is similar to Sample Y except that the high vinyl polybutadiene rubber (Polymer A) is a functionalized polybutadiene elastomer.

The rubber compositions are illustrated in the following Table 1.

**Table 1**

| Material | Parts by Weight (phr) | | |
|---|---|---|---|
| | Control Sample X | Control Sample Y | Exp'l Sample Z |
| Functionalized styrene/butadiene rubber¹ | 38 | 0 | 0 |
| Functionalized low vinyl polybutadiene² | 62 | 62 | 62 |
| High vinyl polybutadiene³ | 0 | 38 | 0 |
| Functionalized high vinyl polybutadiene⁴ | 0 | 0 | 38 |
| Precipitated silica⁵ | 80 | 80 | 80 |
| Silica coupler⁶ | 6.4 | 6.4 | 6.4 |
| Rubber processing oil, fatty acids and waxes⁷ | 30 | 30 | 30 |
| Antidegradants | 3 | 3 | 3 |
| Carbon black (N330) | 10 | 10 | 10 |
| Cure system: zinc oxide, sulfur, accelerators⁸ | 7 | 7 | 7 |

| | | | |
|---|---|---|---|
| ¹Functionalized styrene/butadiene rubber having a styrene content of 20 percent and a vinyl content of 50 percent with a Tg of -26°C as Sprintan 4602 from Trinseo understood to be end functionalized with functional groups comprising siloxane and thiol groups reactive with hydroxyl groups on precipitated silica ² Functionalized relatively low vinyl (12 per cent) polybutadiene rubber as BR1261 from Zeon having a Tg of -92°C and functional groups reactive with hydroxyl groups on precipitated silica ³ Non functionalized relatively high Tg, high vinyl polybutadiene elastomer as Polymer B prepared in Example I ⁴ Functionalized relatively high Tg, relatively high vinyl polybutadiene elastomer as Polymer A prepared in Example I ⁵ Precipitated silica as Zeosil 1165MP from Solvay ⁶Silica coupler comprising a bis(3-triethoxysilylpropyl) polysulfide containing an average in a range of from 2 to 2.6 connecting sulfur atoms in its polysulfidic bridge as Si266 from Evonik ⁷ Rubber processing oil, fatty acids containing stearic, palmitic and oleic acids and waxes comprising paraffinic and microcrystalline waxes ⁸ Zinc oxide, sulfur and sulfur cure accelerators as sulfenamide primary accelerator and diphenyl guanidine secondary accelerator | | | |

The rubber Samples were prepared by blending the ingredients, other than the sulfur curatives, in a first non-productive mixing stage (NP1) in an internal rubber mixer for four minutes to a temperature of 160°C. The resulting mixtures were subsequently individually mixed in a second sequential non-productive mixing stage (NP2) in an internal rubber mixer for three minutes to a temperature of 160°C. The rubber compositions were subsequently mixed in a productive mixing stage (P) in an internal rubber mixer with the sulfur curatives comprising the sulfur and sulfur cure accelerators for two minutes to a temperature of 115°C. The rubber compositions were each removed from the internal mixer after each non-productive mixing step and cooled to below 40°C before the final productive mixing stage.

The following Table 2 illustrates cure behavior and various physical properties of rubber compositions based upon the basic formulation of Table 1 and reported herein as first Control rubber Sample X, second Control rubber sample Y and Experimental rubber Sample Z. Where cured rubber samples are reported, such as for the stress-strain, hot rebound and hardness values, the rubber samples were cured for 14 minutes at a temperature of 160°C.

To evaluate the predictive wet traction, a tangent delta (tan delta) test was run at 0°C.

To evaluate the predictive low temperature performance (e.g. winter and snow conditions) performance, the rubber's storage modulus E' physical property (a measure of its stiffness) was determined at -20°C to provide a stiffness value of the rubber composition at lower ambient temperatures.

**Table 2**

| Material | Parts by Weight (phr) | | |
|---|---|---|---|
| | Control Sample X | Control Sample Y | Exp'l Sample Z |
| Functionalized styrene/butadiene rubber | 38 | 0 | 0 |
| Functionalized relatively low Tg, relatively low vinyl polybutadiene | 62 | 62 | 62 |
| Non-functionalized relatively high Tg, relatively high vinyl polybutadiene rubber (Polymer B) | 0 | 38 | 0 |
| Functionalized relatively high Tg, relatively high vinyl polybutadiene rubber (Polymer A) | 0 | 0 | 38 |
| | | | |

| Cured Properties | | | |
|---|---|---|---|
| Wet Traction Laboratory Prediction | | | |
| Tan delta at 0°C (higher is better) | 0.15 | 0.13 | 0.13 |
| | | | |

| Cold Weather (Winter) Performance (Stiffness) Laboratory Prediction | | | |
|---|---|---|---|
| Storage modulus (E'), (MPa) at -20° C, 10 Hertz, 0.25% strain (lower stiffness values are better) | 9.7 | 8.7 | 5.9 |
| | | | |

| Rolling Resistance (RR) Laboratory Prediction | | | |
|---|---|---|---|
| Rebound at 100°C, percent | 64 | 64 | 66 |
| | | | |

| Additional properties | | | |
|---|---|---|---|
| Tensile strength (MPa) | 18 | 17 | 15 |
| Elongation at break (%) | 367 | 361 | 327 |
| Modulus 300% (MPa) | 14 | 13 | 14 |
| DIN abrasion loss, cc (lower is better)¹ | 59 | 58 | 54 |

| | | | |
|---|---|---|---|
| ¹DN53516, relative volume loss (relative to a control) | | | |

From Table 2 it is observed that:
(A) Experimental Sample Z has a predictive wet traction based on its tan delta property at 0°C of 0.13 which is similar to Control Samples Y and X.
(B) Experimental Sample Z has a predictive rolling resistance for a tire tread of such rubber composition, based on hot rebound property at 100°C of 66, which is beneficially better than the hot rebound properties of Control Samples X and Y which have hot rebound values of 64.
(C) Experimental Sample Z has a DIN abrasion wear resistance value of 54 which is an improvement over the values of 58 for Control Sample Y and 59 for Control Sample X.
(D) Experimental Sample Z has a predictive winter (cold weather) performance based on its stiffness value (E') at -20°C of 5.9 which is a significant improvement over the values of 8.7 for Control Sample Y and 9.7 for Control Sample X.

Therefore, it is concluded that the replacement of a functionalized relatively high Tg styrene/butadiene rubber with a functionalized relatively high Tg, high vinyl polybutadiene rubber in a blend with a functionalized relatively low vinyl, relatively low Tg, polybutadiene rubber for a silica reinforced tread composition will provide similar wet traction and improvements in winter performance, rolling resistance and treadwear based on laboratory determined predictive properties. It is also demonstrated that a non-functionalized relatively high Tg, relatively high vinyl polybutadiene rubber will also improve winter performance, but without improvement in predictive treadwear and rolling resistance for a tire tread. It is also observed that the predictive improvement of winter performance of the non-functionalized relatively high Tg, relatively high vinyl polybutadiene rubber is further improved when compared to a functionalized version of the same polymer as the stiffness value at - 20°C is lowered from 8.7 to 5.9. This lowering of stiffness is a key discovery of this functionalized rubber.

## Claims

1. A rubber composition for use in a tire tread, the rubber composition comprising, based on parts by weight per 100 parts by weight elastomer (phr):
(A) 100 phr of conjugated diene-based elastomers comprising:
(1) 20 to 80 phr or 25 to 75 phr of a first functionalized vinyl polybutadiene rubber having a Tg in a range of from -40°C to -10°C and an isomeric vinyl 1,2-content in a range of from 65 to 85 percent, wherein the first functionalized vinyl polybutadiene rubber contains functional groups reactive with hydroxyl groups on a silica reinforcement of the rubber composition;
(2) 80 to 20 phr or 75 to 25 phr of a second functionalized vinyl polybutadiene rubber having a Tg in a range of from -108°C to -90°C and an isomeric vinyl 1,2-content in a range of from 0 to 15 percent, wherein the second functionalized low vinyl polybutadiene rubber contains functional groups reactive with hydroxyl groups on a silica reinforcement of the rubber composition;
wherein the weight ratio of the second functionalized vinyl polybutadiene rubber to the first functionalized vinyl polybutadiene rubber is at least 1/1 or at least 1.5/1; and
(B) 60 to 200 phr or 80 to 160 phr of a rubber reinforcing filler comprising a combination of silica, preferably precipitated silica or amorphous synthetic precipitated silica, and carbon black in a weight ratio of silica to carbon black of at least 9/1, together with a silica coupling agent having a moiety reactive with hydroxyl groups on the silica and another different moiety interactive with the diene-based elastomers.

2. The rubber composition of claim 1, further comprising from zero to 60 phr, alternatively from 5 phr to 60 phr or from 5 phr to 40 phr, of a resin comprising at least one of styrene-alphamethylstyrene resin, coumarone-indene resin, petroleum hydrocarbon resin, terpene polymer, terpene phenol resin, rosin derived resin and copolymers.

3. The rubber composition of claim 1 or 2, wherein the first and/or the second vinyl polybutadiene rubber is end-functionalized and is the polymerization product of 1,3-butadiene monomer end-functionalized by a functionalized polymerization initiator.

4. The rubber composition of claim 1 or 2, wherein the first and/or the second vinyl polybutadiene rubber is end-functionalized and is the polymerization product of 1,3-butadiene monomer end-functionalized by a functionalized polymerization terminator.

5. The rubber composition of claim 1 or 2, wherein the first and/or the second vinyl polybutadiene rubber is a bi-functionalized vinyl polybutadiene rubber and is the polymerization product of 1,3-butadiene monomer end-functionalized by a combination of functionalized polymerization initiator and polymerization terminator.

6. The rubber composition of at least one of the previous claims, wherein the first and second vinyl polybutadiene rubber contain, independently selected, at least one functional group reactive with silica or hydroxyl groups on the silica, wherein the at least one functional group is selected from the group consisting of:
(A) an amine functional group reactive with hydroxyl groups on the silica;
(B) a siloxy functional group reactive with hydroxyl groups on the silica;
(C) a combination of amine and siloxy groups reactive with hydroxyl groups on the silica;
(D) a combination of siloxy and thiol groups reactive with hydroxyl groups on the silica;
(E) a combination of imine and siloxy groups reactive with hydroxyl groups on the silica;
(F) a hydroxyl functional group reactive with the silica;
(G) an epoxy group reactive with hydroxyl groups on the silica; and
(H) a carboxyl group reactive with hydroxyl groups on the silica.

7. The rubber composition of at least one of the previous claims, further comprising up to 25 phr, preferably 5 phr to 25 phr, of at least one additional diene based elastomer exclusive of styrene containing elastomers.

8. The rubber composition of at least one of the previous claims, further comprising up to 15 phr, preferably 2 to 15 phr, of at least one of 1,4-polyisoprene, preferably cis 1,4-polyisoprene having a cis-content of at least 90 percent, and copolymers of isoprene and butadiene.

9. The rubber composition of at least one of the previous claims, wherein the silica is precipitated silica and is provided as a composite of pre-reacted precipitated silica and a silica coupling agent prior to addition to the rubber composition; or wherein the silica is precipitated silica and is a product of precipitated silica and a silica coupling agent reacted in situ within the rubber composition.

10. The rubber composition of at least one of the previous claims, wherein the silica coupling agent comprises:
(A) bis(3-trialkoxysilylalkyl) polysulfide containing an average in range of from 2 to 4 sulfur atoms in its polysulfide connecting bridge; or
(B) an organoalkoxymercaptosilane; or
(C) their combination.

11. The rubber composition of at least one of the previous claims, wherein the silica coupling agent comprises a bis(3-triethoxysilylpropyl) polysulfide and/or contains an average of from 2 to 2.6 sulfur atoms in its polysulfidic bridge.

12. The rubber composition of at least one of the previous claims containing rosin acid to the exclusion or substantial exclusion of fatty carboxylic acids.

13. The rubber composition of at least one of the previous claims containing rubber processing oil comprising triglyceride-based vegetable oil or a combination of triglyceride vegetable oil and petroleum based oil.

14. The rubber composition of at least one of the previous claims wherein the rubber composition is sulfur-cured.

15. A pneumatic tire having a circumferential rubber tread a comprising the rubber composition of at least one of the previous claims.

## Patentansprüche

1. Kautschukzusammensetzung zur Verwendung in einer Reifenlauffläche, wobei die Kautschukzusammensetzung, basierend auf Gewichtsteilen pro 100 Gewichtsteilen Elastomer (phr), Folgendes umfasst:
(A) 100 phr konjugierte Elastomere auf Dienbasis, die Folgendes umfassen:
(1) 20 bis 80 phr oder 25 bis 75 phr eines ersten funktionalisierten Vinylpolybutadienkautschuks, der eine Tg in einem Bereich von -40 °C bis -10 °C und einen isomeres Vinyl-1,2-Gehalt in einem Bereich von 65 bis 85 Prozent aufweist, wobei der erste funktionalisierte Vinylpolybutadienkautschuk funktionelle Gruppen enthält, die mit Hydroxylgruppen an einer Siliciumdioxidverstärkung der Kautschukzusammensetzung reagieren;
(2) 80 bis 20 phr oder 75 bis 25 phr eines zweiten funktionalisierten Vinylpolybutadienkautschuks, der eine Tg in einem Bereich von -108 °C bis -90 °C und einen isomeres Vinyl-1,2-Gehalt in einem Bereich von 0 bis 15 Prozent aufweist, wobei der zweite funktionalisierte Niedervinylpolybutadienkautschuk funktionelle Gruppen enthält, die mit Hydroxylgruppen an einer Siliciumdioxidverstärkung der Kautschukzusammensetzung reagieren;
wobei das Gewichtsverhältnis des zweiten funktionalisierten Vinylpolybutadienkautschuks zu dem ersten funktionalisierten Vinylpolybutadienkautschuk wenigstens 1 : 1 oder wenigstens 1,5 : 1 beträgt; und
(B) 60 bis 200 phr oder 80 bis 160 phr eines Kautschukverstärkungsfüllstoffs, der eine Kombination aus Siliciumdioxid, vorzugsweise Fällungssiliciumdioxid oder amorphes synthetisches Fällungssiliciumdioxid, und Industrieruß in einem Gewichtsverhältnis von Siliciumdioxid zu Industrieruß von wenigstens 9 : 1 umfasst, zusammen mit einem Siliciumdioxidhaftvermittler, der ein Molekülteil, das mit Hydroxylgruppen an dem Siliciumdioxid reagiert, und ein anderes unterschiedliches Molekülteil aufweist, das mit den Elastomeren auf Dienbasis interagiert.

2. Kautschukzusammensetzung nach Anspruch 1, die ferner von null bis 60 phr, alternativ von 5 phr bis 60 phr oder von 5 phr bis 40 phr, eines Harzes umfasst, das Styrolalphamethylstyrolharz, Cumaronindenharz, Erdölkohlenwasserstoffharz, Terpenpolymer, Terpenphenolharz, von Kolophonium abgeleitetes Harz und/oder Copolymere umfasst.

3. Kautschukzusammensetzung nach Anspruch 1 oder 2, wobei der erste und/oder der zweite Vinylpolybutadienkautschuk endfunktionalisiert ist und das Polymerisationserzeugnis von 1,3-Butadienmonomer ist, das durch einen funktionalisierten Polymerisationsinitiator endfunktionalisiert ist.

4. Kautschukzusammensetzung nach Anspruch 1 oder 2, wobei der erste und/oder der zweite Vinylpolybutadienkautschuk endfunktionalisiert ist und das Polymerisationserzeugnis von 1,3-Butadienmonomer ist, das durch einen funktionalisierten Polymerisationsterminator endfunktionalisiert ist.

5. Kautschukzusammensetzung nach Anspruch 1 oder 2, wobei der erste und/oder der zweite Vinylpolybutadienkautschuk ein bifunktionalisierter Vinylpolybutadienkautschuk ist und das Polymerisationserzeugnis von 1,3-Butadienmonomers ist, das durch eine Kombination eines funktionalisierten Polymerisationsinitiators und eines Polymerisationsterminators endfunktionalisiert ist.

6. Kautschukzusammensetzung nach wenigstens einem der vorhergehenden Ansprüche, wobei der erste und der zweite Vinylpolybutadienkautschuk, unabhängig ausgewählt, wenigstens eine funktionelle Gruppe enthalten, die mit Siliciumdioxid oder Hydroxylgruppen an dem Siliciumdioxid reagieren, wobei die wenigstens eine funktionelle Gruppe aus der Gruppe ausgewählt ist, die aus Folgendem besteht:
(A) einer funktionellen Amingruppe, die mit Hydroxylgruppen an dem Siliciumdioxid reagiert;
(B) einer funktionellen Siloxygruppe, die mit Hydroxylgruppen an dem Siliciumdioxid reagiert;
(C) einer Kombination von Amin- und Siloxygruppen, die mit Hydroxylgruppen an dem Siliciumdioxid reagieren;
(D) einer Kombination von Siloxy- und Thiolgruppen, die mit Hydroxylgruppen an dem Siliciumdioxid reagieren;
(E) einer Kombination von Imin- und Siloxygruppen, die mit Hydroxylgruppen an dem Siliciumdioxid reagieren;
(F) einer funktionellen Hydroxylgruppe, die mit dem Siliciumdioxid reagiert;
(G) einer Epoxidgruppe, die mit Hydroxylgruppen an dem Siliciumdioxid reagiert; und/oder
(H) einer Carboxylgruppe, die mit Hydroxylgruppen an dem Siliciumdioxid reagiert.

7. Kautschukzusammensetzung nach wenigstens einem der vorhergehenden Ansprüche, die ferner bis zu 25 phr, vorzugsweise 5 phr bis 25 phr, aus wenigstens einem zusätzlichen Elastomer auf Dienbasis, ausgenommen styrolhaltige Elastomere, umfasst.

8. Kautschukzusammensetzung nach wenigstens einem der vorhergehenden Ansprüche, die ferner bis zu 15 phr, vorzugsweise 2 bis 15 phr, von einem 1,4-Polyisopren, vorzugsweise cis-1,4-Polyisopren, das einen cis-Gehalt von wenigstens 90 Prozent aufweist, und/oder Copolymeren von Isopren und Butadien umfasst.

9. Kautschukzusammensetzung nach wenigstens einem der vorhergehenden Ansprüche, wobei das Siliciumdioxid Fällungssiliciumdioxid ist und als ein Verbund aus vorreagiertem Fällungssiliciumdioxid und einem Siliciumdioxidhaftvermittler vor einer Zugabe zu der Kautschukzusammensetzung bereitgestellt ist; oder wobei das Siliciumdioxid Fällungssiliciumdioxid ist und ein Erzeugnis aus Fällungssiliciumdioxid und einem *in situ* innerhalb der Kautschukzusammensetzung reagierten Siliciumdioxidhaftvermittler ist.

10. Kautschukzusammensetzung nach wenigstens einem der vorhergehenden Ansprüche, wobei der Siliciumdioxidhaftvermittler Folgendes umfasst:
(A) Bis(3-Trialkoxysilylalkyl)polysulfid, das einen Durchschnitt in einem Bereich von 2 bis 4 Schwefelatomen in seiner Polysulfid verbindenden Brücke enthält, oder
(B) ein Organoalkoxymercaptosilan; oder
(C) deren Kombination.

11. Kautschukzusammensetzung nach wenigstens einem der vorhergehenden Ansprüche, wobei der Siliciumdioxidhaftvermittler ein Bis(3-triethoxysilylpropyl)polysulfid umfasst und/oder einen Durchschnitt von 2 bis 2,6 Schwefelatomen in seiner Polysulfid verbindenden Brücke enthält.

12. Kautschukzusammensetzung nach wenigstens einem der vorhergehenden Ansprüche, die Harzsäure unter Ausschluss oder wesentlichem Ausschluss von Fettcarbonsäuren enthält.

13. Kautschukzusammensetzung nach wenigstens einem der vorhergehenden Ansprüche, die Kautschukverarbeitungsöl enthält, das Pflanzenöl auf Triglyceridbasis oder eine Kombination aus Triglyceridpflanzenöl und Öl auf Erdölbasis umfasst.

14. Kautschukzusammensetzung nach wenigstens einem der vorhergehenden Ansprüche, wobei die Kautschukzusammensetzung schwefelgehärtet ist.

15. Luftreifen, der eine umlaufende Kautschuklauffläche aufweist, die die Kautschukzusammensetzung nach wenigstens einem der vorhergehenden Ansprüche umfasst.

## Revendications

1. Composition de caoutchouc pour son utilisation dans une bande de roulement d'un bandage pneumatique, la composition de caoutchouc comprenant, en se basant sur des parties en poids par 100 parties en poids d'élastomère (phr) :
(A) 100 phr d'élastomères à base de diènes conjugués, qui comprennent :
(1) de 20 à 80 phr ou de 25 à 75 phr d'un premier caoutchouc de polybutadiène fonctionnalisé avec un ou plusieurs groupes vinyle, dont la valeur Tg se situe dans une plage de -40 °C à - 10 °C et qui possède une teneur en une unités vinyle en 1,2 dans une plage de 65 à 85 %; dans laquelle le premier caoutchouc de polybutadiène fonctionnalisé avec un ou plusieurs groupes vinyle contient des groupes fonctionnels aptes à réagir avec des groupes hydroxyle sur un renforcement de la composition de caoutchouc à base de silice ;
(2) de 80 à 20 phr ou de 75 à 25 phr d'un deuxième caoutchouc de polybutadiène fonctionnalisé avec un ou plusieurs groupes vinyle, dont la valeur Tg se situe dans une plage de -108 °C à -90 °C et qui possède une teneur en une unités vinyle en 1,2 dans une plage de 0 à 15 %; dans laquelle le deuxième caoutchouc de polybutadiène fonctionnalisé du type à faible teneur en groupes vinyle contient des groupes fonctionnels aptes à réagir avec des groupes hydroxyle sur un renforcement de la composition de caoutchouc à base de silice ;
dans laquelle le rapport pondéral du deuxième caoutchouc de polybutadiène fonctionnalisé avec un ou plusieurs groupes vinyle au premier caoutchouc de polybutadiène fonctionnalisé avec un ou plusieurs groupes vinyle s'élève à au moins 1/1 ou à au moins 1,5/1 ; et
(B) de 60 à 200 phr ou de 80 à 160 phr d'une matière de charge pour le renforcement du caoutchouc qui comprend une combinaison de silice, de préférence de silice précipitée ou de silice précipitée synthétique amorphe, et de noir de carbone dans un rapport pondéral de la silice au noir de carbone d'au moins 9/1, de manière conjointe avec un agent de couplage pour la silice qui possède une fraction apte à réagir avec des groupes hydroxyle sur la silice et une autre fraction différente apte à entrer en interaction avec les élastomères à base de diènes.

2. Composition de caoutchouc selon la revendication 1, qui comprend en outre de zéro à 60 phr, en variante de 5 phr à 60 phr ou de 5 phr à 40 phr d'une résine qui comprend au moins une résine choisie parmi une résine de styrène-alphaméthylstyrène, une résine de coumarone-indène, une résine d'hydrocarbure de pétrole, un polymère terpénique, une résine de terpène-phénol, une résine qui dérive de la colophane, ainsi que des copolymères.

3. Composition de caoutchouc selon la revendication 1 ou 2, dans laquelle le premier et/ou le deuxième caoutchouc de polybutadiène contenant un ou plusieurs groupes vinyle est/sont du type à extrémités fonctionnalisées et représente(nt) le produit de polymérisation d'un monomère de 1,3-butadiène dont les extrémités sont fonctionnalisées par l'intermédiaire d'un initiateur de la polymérisation fonctionnalisé.

4. Composition de caoutchouc selon la revendication 1 ou 2, dans laquelle le premier et/ou le deuxième caoutchouc de polybutadiène contenant un ou plusieurs groupes vinyle est/sont du type à extrémités fonctionnalisées et représente(nt) le produit de polymérisation d'un monomère de 1,3-butadiène dont les extrémités sont fonctionnalisées par l'intermédiaire d'un agent de terminaison de la polymérisation fonctionnalisé.

5. Composition de caoutchouc selon la revendication 1 ou 2, dans laquelle le premier et/ou le deuxième caoutchouc de polybutadiène contenant un ou plusieurs groupes vinyle reprsente(nt) un caoutchouc de polybutadiène bifonctionnalisé contenant un ou plusieurs groupes vinyle et représente(nt) le produit de polymérisation d'un monomère de 1,3-butadiène dont les extrémités sont fonctionnalisées par l'intermédiaire d'une combinaison d'un initiateur de la polymérisation et d'un agent de terminaison de la polymérisation fonctionnalisés.

6. Composition de caoutchouc selon au moins une des revendications précédentes, dans laquelle le premier et le deuxième caoutchouc de polybutadiène contenant un ou plusieurs groupes vinyle contiennent, d'une manière que l'on sélectionne de façon indépendante, au moins un groupe fonctionnel apte à réagir avec de la silice ou avec des groupes hydroxyle sur la silice, dans laquelle ledit au moins un groupe fonctionnel est choisi parmi le groupe qui est constitué par :
(A) un groupe fonctionnel de type amine apte à réagir avec des groupes hydroxyle sur la silice ;
(B) un groupe fonctionnel de type siloxy apte à réagir avec des groupes hydroxyle sur la silice ;
(C) une combinaison de groupes amine et de groupes siloxy aptes à réagir avec des groupes hydroxyle sur la silice ;
(D) une combinaison de groupes siloxy et de groupes thiol aptes à réagir avec des groupes hydroxyle sur la silice ;
(E) une combinaison de groupes de type imine et de groupes siloxy aptes à réagir avec des groupes hydroxyle sur la silice ;
(F) un groupe fonctionnel de type hydroxyle apte à réagir avec la silice ;
(G) un groupe époxy apte à réagir avec des groupes hydroxyle sur la silice ; et
(H) un groupe carboxyle apte à réagir avec des groupes hydroxyle sur la silice.

7. Composition de caoutchouc selon au moins une des revendications précédentes, qui comprend en outre jusqu'à 25 phr, de préférence de 5 phr à 25 phr, d'au moins un élastomère supplémentaire à base de diènes, à l'exclusion d'élastomères qui contiennent du styrène.

8. Composition de caoutchouc selon au moins une des revendications précédentes, qui comprend en outre jusqu'à 15 phr, de préférence de 2 phr à 15 phr, d'au moins un élément choisi parmi le 1,4-polyisoprène, de préférence le 1,4-cis-polyisoprène qui possède une teneur en unités cis s'élevant à au moins 90 %, et des copolymères d'isoprène et de butadiène.

9. Composition de caoutchouc selon au moins une des revendications précédentes, dans laquelle la silice représente de la silice précipitée et est fournie sous la forme d'un composite d'une silice précipitée qui a fait l'objet d'une mise en réaction préalable et d'un agent de couplage pour la silice avant son addition à la composition de caoutchouc ; ou dans laquelle la silice représente de la silice précipitée et représente un produit de silice précipitée et d'un agent de couplage pour la silice que l'on a fait réagir in situ au sein de la composition de caoutchouc.

10. Composition de caoutchouc selon au moins une des revendications précédentes, dans laquelle l'agent de couplage pour la silice comprend :
(A) un bis(3-trialcoxysilylalkyl) polysulfure qui contient une moyenne dans la plage de 2 à 4 atomes de soufre dans son pont polysulfure faisant office de liaison ; ou
(B) un organoalcoxymercaptosilane ; ou
(C) leur combinaison.

11. Composition de caoutchouc selon au moins une des revendications précédentes, dans laquelle l'agent de couplage pour la silice comprend un bis(3-triéthoxysilylpropyl) polysulfure et/ou contient une moyenne de 2 à 2,6 atomes de soufre dans son pont polysulfure.

12. Composition de caoutchouc selon au moins une des revendications précédentes, qui contient de l'acide résinique à l'exclusion ou à l'exclusion essentielle d'acides carboxyliques gras.

13. Composition de caoutchouc selon au moins une des revendications précédentes, qui contient une huile plastifiante pour le caoutchouc qui comprend une huile végétale à base de triglycérides ou une combinaison d'une huile végétale à base de triglycérides et d'une huile à base de pétrole.

14. Composition de caoutchouc selon au moins une des revendications précédentes, dans laquelle la composition de caoutchouc est vulcanisée au soufre.

15. Bandage pneumatique qui possède une bande de roulement circonférentielle qui comprend la composition de caoutchouc selon au moins une des revendications précédentes.
